# EUROPEAN PATENT APPLICATION

(11) **EP 1 379 033 A1**
(43) Date of publication of application: **07.01.2004**
(21) Application number: 02425430.2
(22) Date of filing: 01.07.2002
(51) Int. Cl.: H04L 12/56, H04Q 7/22

(54) **Method for releasing single downlink TBFs in a mobile radio system**

(71) Applicant: Siemens Mobile Communications S.p.A., 20126 Milano (IT)
(72) Inventor: De Benedittis, Rossella, 20137 Milano (IT); Durastante, Gianluca, 67040 Poggio di Roio (IT)
(74) Representative: Giustini, Delio

(57) **Abstract**

In mobile radio networks of second (GSM-GPRS) and third generation (3G) a packet data service is provided. Packed data are transmitted on temporary connections named temporary block flow (TBF) set up in one or both the transmission directions independently. To open and maintain a TBF some dedicated resources shall be allocated by the network, for example: carrier, timeslots, codes (in case of CDMA), buffer memory for data queues. Mobiles shall forward to the network a request to open a TBF, while the release automatically follows the end of the active session, when the network acknowledges the uplink radio block marked as the last. When there is no downlinks TBF in progress, the establishment of an uplink TBF requires the MS to go through the common channel (PRACH) from sending a PACKET CHANNEL REQUEST message, thus resulting more time consuming and less efficient. According to GSM 04.60, some two specular Timers, namely T3192 in the mobile and T3193 in the network, time the definetly release of the resources allocated for downlink TBF. While Timer T3192 is running, the MS is not allowed to request for the opening of an uplink TBF. This means that, in case there is such a need and no new downlink TBF is established by the network in the meanwhile, the MS is requested to stay on the released downlink TBF resources till T3192 expires and, only then, it can forward its query for an uplink TBF via the common channels. According to the method of the invention the mobile station, at the reception of the last downlink data packet from the network, sends the PACKET DOWNLINK ACK/NACK message and continues to be active on the resources (both uplink and downlink) of the released TBF. More precisely, while Timer T3192 is running, the MS can at any time forward its query for opening of an uplink TBF on the uplink resources (fig.8).

## Description

### FIELD OF THE INVENTION

The following invention finds application in the field of data packet transmission performed by cellular systems of second Generation like GSM-GPRS (Global System for Mobile communications - General Packet Radio Service) or third Generation (3G) like UMTS (Universal Mobile Telecommunication System), indifferently, and in particular defining a method to allow the opening of an uplink TBF (Temporary Block Flow) after the closure of a downlink one, the network polling the MS to send its query on he radio resources of the released downlink TBF.

### BACKGROUND ART

Packet services are included in the context of the emerging services offered by second-generation cellular network, such as for instance the GSM network. This led to the definition and publication of new technical specifications concerning a packet switching service on the existing GSM networks. The service is known under GPRS acronym (General Packet Radio Service) but the term can also be used to define the system or the network where the service is performed. The packet switching routing is "connectionless" due to its nature, that is, it does not require the constant use of physical resources for the whole active session time; consequently, the available resources can be shared among more users who use them alternately only when these are actually needed. The GPRS system avails of its own interfaces and a new SGSN (Service GPRS Support Node) node. The SGSN node is at the same hierarchical level as an MSC (Message Switching Centre) node of GSM, it keeps records of the individual locations of the mobiles and performs the safety and access control functions. To this purpose, the HLR (Home Location Register) record is enriched with the information of the GPRS users. Packet services offer high speed data services to the Mobile Stations (MS) without saturating the network.

The next introduction of 3^{rd} Generation UMTS (Universal Mobile Telecommunication System) systems further improve data service by making possible greater throughputs and the asymmetrical traffic typical of the Internet Protocol (IP). The European 2^{nd} Generation PLMN (Public Land Mobile Network) such as: GSM 900 MHz-GPRS, DCS 1800 MHz (Digital Cellular System), PCS (Personal Communication System) etc, are subjected to recommendations issued by international entities (CEPT/CCITT, ETSI/ITU-T) whose purpose is that of making the operation of the systems of the various manufacturers each other compatible. UMTS systems are subjected to international standards issued by 3GPP (3^{rd} Generation Partnership Project) consortium. In the field of the 3GPP standardisation two CDMA radio access techniques have been defined, respectively known as: TDD UTRA (Time Division Duplex UMTS Terrestrial Radio Access) in which transmission directions are distinguished in the time domain, and WCDMA UTRA (Wide band Code Division Multiple Access UMTS Terrestrial Radio Access); in which transmission directions are distinguished in the frequency domain. The TDD UTRA technique foresees in its turn two options: a broad band one, known as 3.84 Mchips TDD, and a narrow band one, known as 1.28 Mcps TDD or even as TD-SCDMA (Time Division - Synchronous Code Division Multiple Access). The Assignee and CWTS (Chinese Wireless Telecommunication Standards) committee are furthermore engaged in the development of a 3G TD-SCDMA standard which is based on the 3GPP 1.28 Mcps TDD physical layer and reuses much of the GSM-GPRS higher layer functions and procedures, offering the operators a technology able to run on most of the deployed GSM network elements; this standard is known as TD-SCDMA System for Mobile (TSM).

Hereafter the term "mobile station" and "User Equipment" (UE) of UMTS are considered as synonyms.

As known, a public mobile radio system is designed on the basis of a protocol having several hierarchical levels used to manage the telephone signalling present at the different interfaces. Most of the 3G systems employ a suited version of the GSM-GPRS protocol. The layer structure enables to subdivide the signalling protocol functions in groups of superimposed blocks on the Control Plane (C-Plane) and to describe the same as a succession of independent stages. Each level avails of the communication services provided by the lower level and offers its own services to the higher level. Level 1 of the above-mentioned protocol is strictly tied to the type of physical carrier used for the connection at the two sides of the different interfaces; it describes the functions necessary to transfer the bit/chip flows of the radio connections to the on-air interface Am/Um and on terrestrial connections to A-bis and A interfaces. Level 2 develops functions controlling the correct sequential flow of messages (transport functions) in the aim of implementing a virtual carrier without errors between the connected points. Level 3, called network level, and the higher levels, develop processing functions of the messages for the control of the main application processes. The control logic channels of the on-air Am/Um interface route the information in two propagation directions as messages exchanged between the Mobile Station (*MS*) and the network. This information passes over the frame of the Am/Um interface and concerns, more or less, the remaining parts of the network. To enable a regular operation of a complex mobile system it is necessary that messages be regulated both in the shape and in the flow through an appropriate protocol that will be summarised in the following.

Although the physical layers of GSM-GPRS and 3G systems are quite different, the higher levels are quite similar, so that the description of the packet structure and the included messages involving the prior art and the invention are valid for the two type of systems. As far as the physical layer is concerned, it is useful to remind that both GSM-GPRS and 3G systems are based on sequential TDMA (Time Division Multiple Access) frames which synchronise the transmission of data streams over the air; the main difference between GSM and CDMA systems is that during a timeslot one GSM user at a time is enabled on an assigned carrier, while more CDMA users can simultaneously be enabled according to a multiple code access. The CDMA technique employs reciprocally orthogonal spreading code sequences, that is whose cross-correlation can be assumed as null. It just enables the discrimination among the different users summing up in the transmission band, since on a channel characterised by its own code sequence the signals of the other channels, as a result of the correlation, will appear as a noise. Another difference may be the use of the FDMA (Frequency Division Multiple Access) technique by the GSM in comparison with the 3G TDD techniques (e.g. TSM, 1.28 Mcps TDD and 3.84 Mcps TDD), this is particularly true for the duplexing mode. The FDD technique (Frequency Division Duplexing) used by GSM duplexing employs different bands for the uplink and downlink. The two bands are separated by an unused gap band to enable the opportune filtering. The TDD technique (Time Division Duplexing) employs some timeslots of the frame for uplink and the others for downlink. If the time division between the two service times is small, the transmission and reception appear simultaneous to the user.

Turning back the attention to the communication protocol the following layers are pointed out:
- LLC (Logical Link Control): this layer gives a ciphered logic link highly reliable to transport information between level 3 entities in the MS mobile and in the SGSN node. The LLC protocol is specified in GSM 04.64.
- RLC/MAC: the RLC (Radio Link Control) function gives a reliable radio link and maps the LLC frames within the physical channel GSM-GPRS. The MAC (Medium Access Control) function controls the access signalling procedures (request and grant) for the radio channel. The RLC/MAC protocol is defined in GSM 04.60.

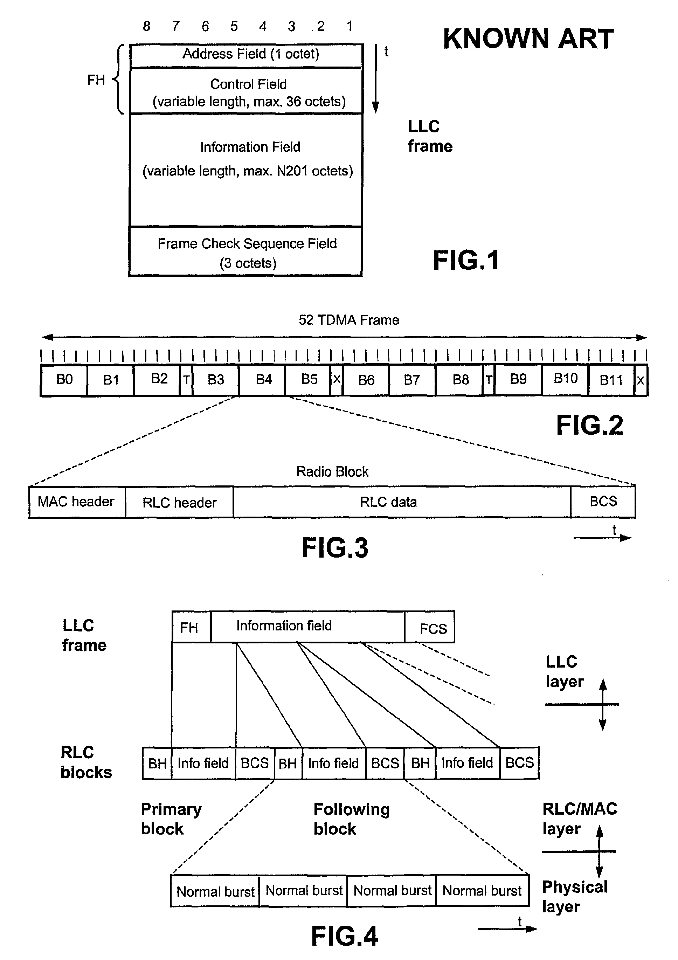

**Fig.1** of the present application (corresponding to Figure 3 of the GSM 04.64 standard) depicts the content of a so-called LLC frame which supports the homonym layer. The LLC frame of **Fig.1** timely proceeds from top to bottom and includes a FH header (Frame Header), followed by an "Information Field" of variable length, reserved to data that must be routed, followed in turn by a FCS (Frame Check Sequence) tail that contains the result of a checksum on the previous fields. The FH header includes an address field for the identification of the frame and a control field including an opportune SAPI (Service Access Point Identifier) identifier. Concerning the control of the information flow, LLC procedures, and consequently the underlying RLC/MAC procedures, are modelled on known labelled concepts as HDLC (High level Data Link Control), see ISO 4335. The HDLC control employs a cyclic numbering scheme to guarantee the integrity of the sequence of data transmitted. Independent numbering schemes are used for each logical link. The LLC procedures for data transfer are based on two operating methods, respectively: Acknowledged and Unacknowledged. In the Acknowledged mode two entities (peers) are involved, participating to a balanced data connection, where each entity undertakes the responsibility for the organisation of its data flow and for the recovery procedures of errors associated to the transmissions it originates. Each entity operates both as data source and as termination, in a link thus resulting balanced, enabling the information to flow in both directions. This operating mode is known with the ABM acronym (Asynchronous Balanced Mode) and offers a reliable service with an ordered delivery of the packets. In the Unacknowledged mode, a logic entity is involved, which can starts the transmissions towards a second entity (peer) without a logical connection between the two entities has been established before. In this case the LLC layer does not assure the ordered delivery of the packets. The errors in the frames received are detected and the wrong frames can be discarded or otherwise delivered by the LLC layer, which however does not actuate any procedure for error recovery. The transformation suffered by the packet information (data and signalling) in the passage from an LLC frame to the physical layer, and vice versa, is shown in the successive **Figures 2 to 4**.

**Fig.2** (corresponding to Figure 2 of GSM 3.64) shows a multiframe of 52 GSM frames, divided into 12 radio blocks of four frames each, plus two T frames used for the synchronisation and two X idle frames. The multiframe of fig.2 is used to time multiplex the GPRS and GSM logical channels. Different structures are foreseen for radio blocks, out of which one for the transfer of packet data is visible in **fig.3**. With reference to **fig.3** (corresponding to Figure 4 of the GSM 3.64) the indicated GPRS radio block includes the following fields:
- MAC 8 bit header, contains control fields, differing for uplink and downlink directions;
- RLC header of variable length, as above;
- RLC data, contains octets relating to one or more units of the LLC protocol;
- BCS (Block Check Sequence), used for error detection .

A block similar to the previous one, but with the sole MAC header, is foreseen for the transfer of control messages. For the GPRS service the detail of the different fields belonging to RLC uplink/downlink data blocks is indicated under point 10.2 of the GSM 4.60, while for RLC/MAC control blocks, the detail is indicated under point 10.3. Additional indications are given for the detail of RLC/MAC blocks relating to the EGPRS service.

**Fig.4** (corresponding to Figure 20 of the GSM 3.64) shows the segmentation of the LLC layer frames within the radio blocks of the RLC/MAC layer. As it can be noticed, each radio block is transported by four consecutive Normal bursts of the GSM multiframe of **fig.3**. The four Normal bursts have to be intended as interleaved on four consecutive TDMA 4,615 ms frames. The meaning of the different fields has already been described, except for the BH field (Block Header) that is a block header. It is worth remembering that the design setting of the GPRS system has maintained as target the compatibility with the existing GSM standard, in order it can be easily integrated availing of the same physical channel at the Um interface. The resources necessary to the GPRS service foresee an additional number of logical channels supporting the transfer of radio blocks through the physical Packet Data Channel (PDCH). GPRS logical channels have names and functional characteristics greatly faithfully following those of the channels of the Traditional GSM, though referred to packets.

In operation the RLC protocol defines the procedures for a re-transmission of RLC blocks whose delivery was unsuccessful, in accordance to a selective scheme called ARQ (Automatic Repeat reQuest). The MAC protocol defines the procedures enabling a plurality of MS mobiles to share a common transmission means, which can also consist of different physical channels. The MAC functionality supplies an arbitration among the plurality of mobiles attempting to simultaneously transmit, taking care to avoid collisions. The GPRS service supports the notion of service quality QoS (Quality of Service), in terms of: service priority (priority), reliability, delay in the transfer of an end-to-end packet (Gm-to-Gi), and medium and peak throughput compatibly with the multi-slot class. QoS parameters, together with the operation A, B, C, class and the multi-slot capacity, form part of a user profile communicated to the network in the phase of GPRS attack.

The sub-set of MAC procedures governing the dynamic allocation of resources, provides temporary connections on the physical layer, called TBF (Temporary Block Flow), which include memory buffers to house the queues of RLC/MAC blocks. Each TBF connection enables the point-to-point unidirectional transfer of data and user signalling within a cell, between the network and a mobile station, or vice versa. Control messages for the establishment/abatement of a connection and the allocation/deallocation of relevant support physical resources, for instance of TBF buffers, contemplates different opportunities capable of covering the whole survey foreseen in the packet transfer mode of the level-2 RR (Radio Resource) sublayer. For simplicity, it is here described a very limited survey of establishment/abatement of TBF connections and of the relevant operation modes. We can start from the establishment of a TBF uplink connection following a Packet Transfer originated by the mobile. In this case the mobile requires the assignment of a GPRS channel sending a PACKET CHANNEL REQUEST message including a request for the resources needed for the transfer of packets to the network on the physical common control channel (P)RACH ((Packet) Random Access CHannel). In case of reception, the network replies with a PACKET UPLINK ASSIGNMENT message on the common control channel (P)AGCH ((Packet) Access Grant Channel), allocating to the mobile the resources requested for the uplink transfer of packets. The resources include one or more PDCHs. The network does not assign any buffer in uplink direction (the buffer resides in the mobile). The network requires simply knowing the number of blocks that a mobile intends to transmit. We can now proceed examining the establishment of a TBF connection downlink following a Packet Transfer ended towards the mobile. In this case at the end of the paging procedure, the network sends the mobile a PACKET DOWNLINK ASSIGNMENT message in the Ready state on the common control channel, with enclosed the list of PDCH channels allocated for the downlink transfer; if the MS location is already known at the network, the PACKET DOWNLINK ASSIGNMENT message can be directly sent on the common control channel PCH (Paging CHannel) or alternatively on the Packet Common Control Channel (PCCCH) if configured, thus skipping the paging procedure. A buffer, relevant to the downlink TBF, is purposely allocated to contain the RLC/MAC blocks to be sent.

A TBF is kept alive only for the duration of the transfer of one or more LLC protocol units to the right purpose of transferring the corresponding RLC/MAC blocks. The network assigns each TBF connection its own temporary identifier, called TFI (Temporary Flow Identity). The MS mobile shall assume that the TFI value is unique among TBF competitors in each direction, uplink or downlink. An RLC/MAC data block is identified to the TBF to which it is associated through its own field where the identifier TFI is written, and another field to indicate the uplink or downlink direction of the block. Should the RLC/MAC block be referred to a control message, a field is foreseen to indicate the message transmission direction and type. Three access modes are supported for an uplink TBF, respectively:
- Dynamic Allocation;
- Extended Dynamic Allocation; and
- Fixed Allocation.
It is the network which defines, when assigning the resources for an uplink TBF, the access mode the MS shall use. In case of fixed allocation, the network reserves to the MS a finite time interval during which the MS is allowed to transmit on the assigned resources. During the specified time interval, the MS will be the only user of the resources.

In the case of dynamic or extended dynamic allocation, the UE can access to the uplink assigned resources only when explicitly requested, i.e. when polled, by the network; at the purpose, the header of each RLC/MAC block transmitted on a PDCH channel in "downlink" direction includes an additional field called USF (Uplink State Flag), which is used by the network in the form of a flag to control the time division multiplexing of different mobile stations on a physical channel PDCH in uplink direction. We can now better qualify the already mentioned PACKET UPLINK ASSIGNMENT message, sent by the network towards the mobiles, stating that it includes: the identifier TFI of the downlink/TBF buffer containing the control block carrying this message, the list of the allocated PDCH channels (time slots), and a corresponding USF value for each allocated channel. Three bits are foreseen for the USF field that enable to unambiguously discriminate up to eight users sharing a time-slot, also in the borderline case in which the single TBF buffer are associated all the eight time slots of an FDMA frame. A TBF can be of the "open ended" or "closed ended" type: in the first case the allocation takes place on an unlimited time basis, while in the second case the allocation is limited to a pre-set number of RLC blocks, this second opportunity can offer a more fair access to the transmission means during the highest loads of the service. The network, at each RLC/MAC block period, iterates a non-standardised scheduling mechanism for the enabling/disabling of the USF flags univocally associated to TBF transmission queues allocated in uplink. The USF reserved for each PDCH allocated to a TBFj uplink are communicated to the MS mobile in the PACKET UPLINK ASSIGNMENT or PACKET TIMESLOT RECONFIGURE message. Of course the association of USF*j* and TBF*i* values shall be such to avoid any interference. The MS mobile performs the monitoring of all RLC/MAC downlink radio blocks of the PDCH assigned to it in uplink. When it detects the presence of an USF belonging to the set among those assigned to it, the uplink TBF is enabled to transmit on the subsequent radio uplink block of the PDCH.

In both the directions, the TBF resources are granted until data to be retransmitted are queued on the RLC/MAC layer. The release of the uplink resources is generally started by the mobile that counts in reverse direction the RLC blocks transmitted, but can also be started by the network. The mobile, after shipment of its last RLC block places in stand-by, waiting for a PACKET UPLINK ACK/NACK message by the network. This message includes a RRBP field (Relative Reserved Block Period), whose value specifies a well defined uplink block in which the mobile must reply to the network by sending a PACKET CONTROL ACKNOWLEDGEMENT message and then release the TBF connection, and the Final Ack Indicator (FAI) bit set to "1". Afterwards the network can re-utilise the TFI identifier of the TBF connection and the USF flag for another MS mobile. The RRBP field is associated to a S/P field indicating if the RRBP content is valid or not; in case of validity the mobile shall transmit the radio block on the uplink frame in the same time-slot where the RRBP field has been received in the downlink frame, waiting for a number of TDMA frames specified by the coding of the RRBP field. The delay is relevant to the first TDMA frame of the downlink block that contains the RRBP value. After receipt of an RLC/MAC block containing a valid value for RRBP the mobile has no more the need for monitoring the USF field in the RLC/MAC block downlink transmitted just before the Uplink radio block reserved to the mobile. The mechanism actuated through the pair of S/P (Supplementary/Polling) and RRBP (Relative Reserved Block Period) fields represents a derogation to the mechanism of the USF flags, mainly valid for control messages, in the cases in which the reply of the mobile has to be monitored (polled) by the network, or vice versa.

Concerning the multiplexing of mobile stations on PDCH channels that they share in the "downlink" direction, all the TBF's procedures are more simplified since, contrarily to what happens for the uplink transfer, the intermediate of appropriate flags of the USF type is no more necessary. In fact, multiplexing is directly made by a scheduler that selects time by time the downlink TBF that shall transmit an RLC/MAC block on the current PDCH channel. The scheduler employs to this purpose a scheduling algorithm, non-standardised, which assigns the access permitted to the single TBF on the physical resources (PDCH), identifying the TBF through the relevant TFI. The release of a TBF downlink connection is started by the network that sends a RLC last data block with an FBI field (Final Block Indicator) at the true logic value and with a valid value in the RRBP field, starting Timer T3191. This enables the network to start a polling of the mobile for the reception of a PACKET DOWNLINK ACK/NACK final message. Two specular timers signal the different instants at which the assignment of the current TBF looses its validity, separately for the mobile and the network. The two timers are allocated both to the network (T3193) and the mobile (T3192) independently. The counting value T3192 used by the mobile is known from the system information periodically broadcast on the common channels, so that the it is known a priori for all the downlink connections of the whole cell.

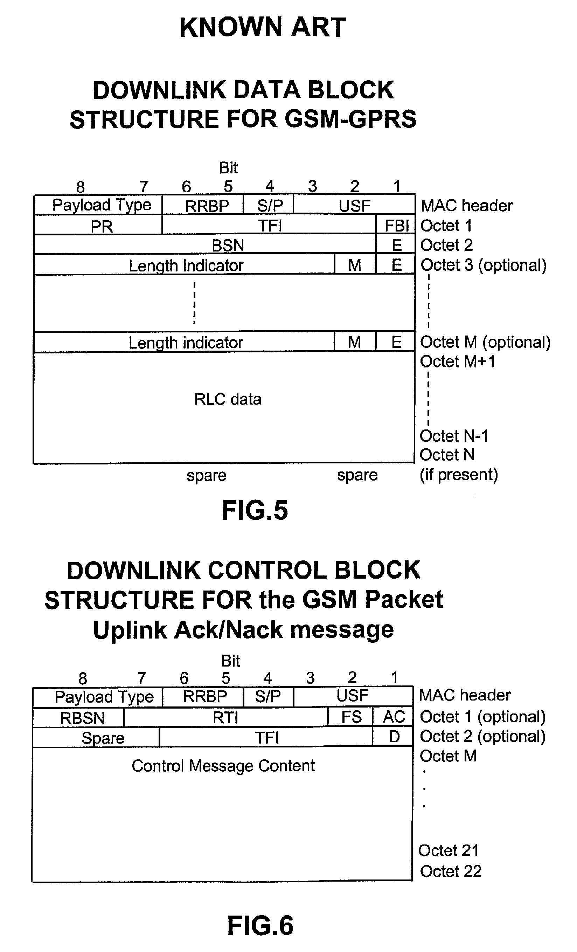

For the sake of completeness, **Fig.5** shows the structure of a conventional downlink GSM-GPRS data block. **Fig.6** shows the structure of a downlink control block of the GSM-GPRS. With reference to the **fig.5**, the message is like a sequence of bytes starting from a MAC header followed by the RLC data of the particular message that the network has to send to the mobile. The various bits of each byte of the MAC header belongs to named fields. Fields RRBP, S/P, USF, TFI, and FBI have been already described. As concerns the remaining fields, Payload Type is self-explanatory, BSN is the Block Sequence Number, PR indicates the Power Reduction of the current RLC block, M is the More bit used to delimit the LLC frames within a TBF, E is the Extension bit used to signal whether an optional RLC octet is present, and Length Indicator is used to delimit LLC frames within an RLC data block.

With reference to the **fig.6** the fields named as the preceding **fig.5** have the same meaning, while as concerns the new ones: RBSN is the Reduced Block Sequence Number described in paragraph 9.1.4a of the mentioned document, RTI is the Radio Transaction Identifier used to group the downlink RLC/MAC control blocks that make up an RLC/MAC control message, FS is the Final Segment (FS) bit used to indicate whether the downlink RLC/MAC control block contains the final segment of an RLC/MAC control message, AC is the Address Control (AC) bit used to indicate whether the optional TFI/D octet is present in the header of downlink RLC/MAC control blocks, and D is the Direction bit used to indicate the direction of the TBF.

### DESCRIPTION OF THE TECHNICAL PROBLEM

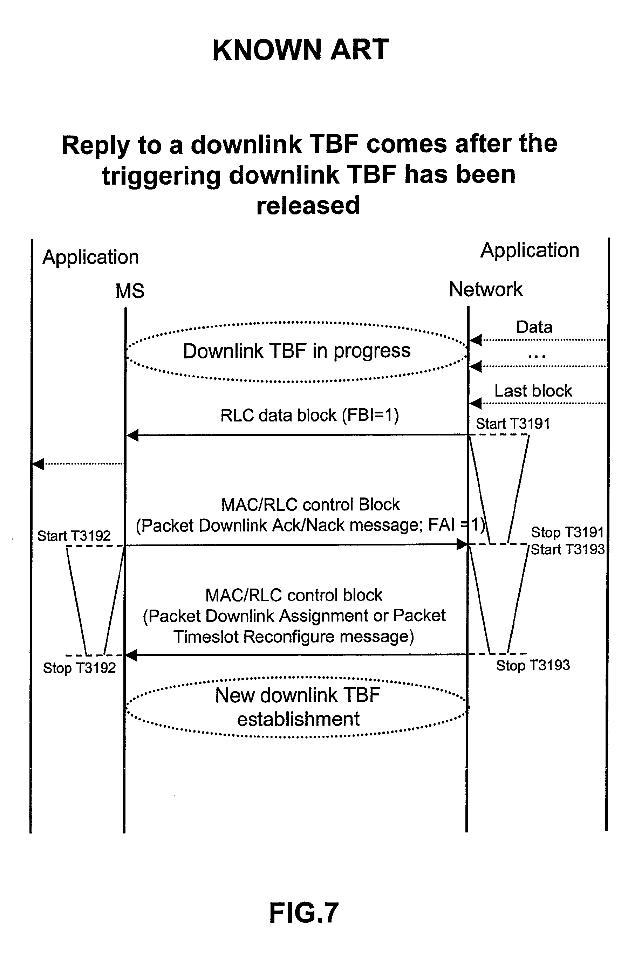

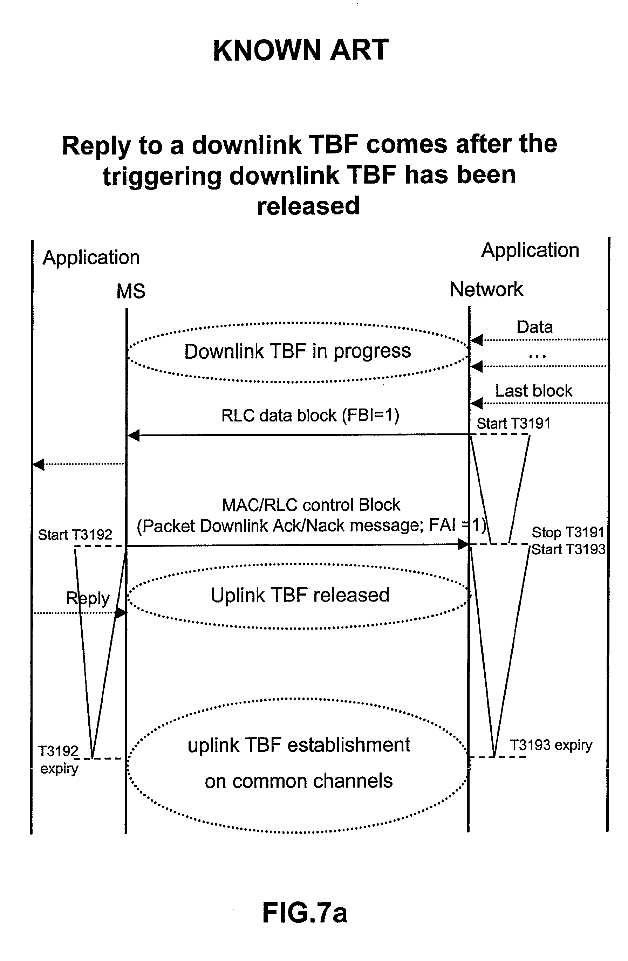

While a downlink TBF is in progress, the MS can easily require the opening of an uplink TBF exploiting for instance the uplink messages which acknowledge the received downlink TBF data packets (e.g.. via a PACKET DOWNLINK ACK/NACK message); this way, the MS can forward its query to the network without going through the common channels (i.e. PRACH). However, when there is no downlink TBF in progress, the establishment of an uplink TBF requires the MS to go through the steps reported in the previous sub-clause (i.e. from sending a PACKET CHANNEL REQUEST message on the common channel PRACH), thus resulting more time consuming and less efficient, i.e. the use of common resources implies risks for collisions.
According to the current specifications GSM 04.60, and with reference to **fig.7**, the release of a downlink TBF starts when the network sends the last data block with the Final Bit Indicator (FBI) set to "1". The network shall then start Timer T3191. The MS, in turn, shall acknowledge this last received data block sending a PACKET DOWNLINK ACK/NACK message, with the Final Ack Indicator (FAI) bit set to "1", at the network indicated RRBP radio block and start (or restart, in case of a subsequent received last downlink data packet) Timer T3192. The detection from MS of the acknowledgement message to the last transmitted downlink data packet shall make the network stop Timer T3191 and start Timer T3193. While Timer T3193 is running, the network may establish a new downlink TBF towards the MS, by sending the PACKET DOWNLINK ASSIGNMENT or PACKET TIMESLOT RECONFIGURE message with the Control AcK bit set to "1" on the same resources of the released downlink TBF.
While Timer T3192 is running, the MS shall continue to monitor the resources of the released downlink TBF and, if a PACKET DOWNLINK ASSIGNMENT or PACKET TIMESLOT RECONFIGURE message is detected, it shall stop Timer T3192, consider the previous TBF as released and act upon the new assignment. However, while Timer T3192 is running, the MS is not allowed to request for the opening of an uplink TBF. This means that, in case there is such a need and no new downlink TBF is established by the network in the meanwhile, the MS is requested to stay on the released downlink TBF resources till T3192 expires and, only then, it can forward its query for an uplink TBF via the common channels.

In real scenarios, it may very well happen that, after the delivery of the last downlink packet data, the MS is requested to send uplink packet data to the network.
Fig.7a describes the case where, after the release of the downlink TBF, the MS has the need to open an uplink TBF. According to the current GSM specifications, the MS has to wait for timer T3192 expiry, before forwarding its query via the common channels. A possible way to overcome the above described situation can be that the network sends, while waiting for the possible next valid downlink packet data, LLC (Logical Link Control) frames with a wrong checksum (CRC); this impedes the MS for their acknowledgement, thus artificially delaying the release of the downlink TBF. The use of a wrong CRC is currently allowed by the GSM standard (Ref. GSM 04.64). The artificial maintenance of a downlink TBF allows the MS to easily forward its possible request for the opening of an uplink TBF, exploiting the resources of the downlink TBF (i.e. without moving to the common channels).

Though actually solving the issue, this is not a clean solution as it simulates a wrong detection condition. This trick can for instance induce the MS to misleading conclusions about the quality of the radio connection, pushing it to unjustified actions like searching for a more suitable cell, or causing a switch to a more robust modulation and coding scheme in case the link adaptation is implemented. Additionally, the transmission of invalid LLC frames has the effect to increment the spectrum occupancy, increasing the system interference, without any benefit for the offered throughput.

Besides the above mentioned points, the current GSM procedure has also the additional side effects:
- while Timer T3192 (or, equivalently, T3193) is running, no other message from the network is expected but PACKET DOWNLINK ASSIGNMENT or PACKET TIMESLOT RECONFIGURE. This implies that the network has no way, after timer T3192 (T3193) has started, to reassign the TFI value of the released downlink TBF to a new connection.
- The network cannot re-assign a different value to the Timer T3192, respect to the one broadcast to all MSs via System Information.

### OBJECTS OF THE INVENTION

The main object of the present invention is that to overcome the drawbacks of the known art and to indicate a method to allow, after the release of a downlink TBF, the establishment of an uplink TBF while Timers T3192 and T3193 are running, exploiting the resources of the released downlink TBF.

### SUMMARY AND ADVANTAGES OF THE INVENTION

In order to overcome the above limitations, object of the present invention is a method for allowing the establishment of an uplink TBF after the release of a downlink TBF, while Timers T3192 and T3193 are still running, as disclosed in the claims.

According to the method of the invention the mobile station, at the reception of the last downlink data packet, sends the PACKET DOWNLINK ACK/NACK message with FAI bit set to "1", starts or restarts Timer T3192 and continues to be active on the resources (both uplink and downlink) of the released TBF. More precisely, while Timer T3192 is running, the MS can at any time forward its query for opening of an uplink TBF on the uplink resources. This particularly means that, as the MS is allowed to transmit only at the RRBP radio blocks indicated by the network, it can ask for an uplink TBF establishment either at the RRBP radio block at which it has to acknowledge (via the PACKET DOWNLINK ACK/NACK message) the received last downlink data packet, as currently foreseen by GSM specification (Ref. GSM 04.60), or at any following RRBP periods signalled by the network via a polling message. The Polling message proposed by this invention is the PACKET POLLING REQUEST message, already defined in GSM 04.60.

While timer T3192 is running, any following received RLC data block with FAI set to "1" and with valid RRBP, will be acknowledged by the MS and will restart Timer T3192, both for the unacknowledged (as currently specified in GSM 04.60 ) and for the acknowledged transfer mode.

While timer T3193 is running, the network can solicit the MS to ask for an uplink TBF establishment, by sending the PACKET POLLING REQUEST message with valid RRBP field on the resources of the released downlink TBF. While Timer T3193 is running, the network can decide to completely release the still active resources, by sending to the MS a PACKET PDCH RELEASE message. At the detection of a PACKET PDCH RELEASE message while Timer T3192 is running, the MS shall stop Timer T3192, completely releasing the resources.

Possible enhancement of the method is that the network includes in the PACKET POLLING REQUEST message the System Frame Numbers (SFN), or equivalently the radio blocks, at which the MS is allowed to autonomously forward (i.e. without waiting for an explicit invitation from the network) its query while timer T3192 is running; this avoid the network to explicitly poll the MS. The way how to signal the allowed SFNs can follow the method described in the International Patent Application WO01/72080, titled: "ACCESS CHANNEL SCHEDULING IN A RADIO COMMUNICATION SYSTEM", belonging to the same Assignee. In particular, the invention concerns a process to control the access of the MSs to uplink shared channels, where the network signals, besides additional other information, the System Frame Numbers at which an MS is allowed to access to a specific uplink shared channel. To mark the allowed frames, an expression of the following type is used: SFN module [P1] = P2, where SFN is the granted System Frame Number and P1 and P2 are two parameters signalled by the network. At the detection of the PACKET POLLING REQUEST message including the SFNs indication, the MS shall reply by sending, at the indicated RRBP, either a request for an uplink TBF, if available, or the PACKET CONTROL ACK message acknowledging the received PACKET POLLING REQUEST message. In the last case, the MS can forward its request for an uplink TBF which may become available later, at any of the network indicated SFNs, while Timer T3192 is still running.

Further enhancement of the procedure is that the PACKET POLLING REQUEST message includes, besides or without the SFN indication, a new setting of Timer T3192. This allows the network to tailor the value of this timer to the specific connection, thus overcoming the current GSM limitation of a common T3192 value for all users. At the detection of the PACKET POLLING REQUEST message including Timer T3192 value, the MS shall restart Timer T3192 at the indicated new value, send at the indicated RRBP either the request for an uplink TBF, if any, or the PACKET CONTROL ACK message acknowledging the received PACKET POLLING REQUEST.

The MS can ask for an uplink TBF either via the PACKET RESOURCE REQUEST message or via the PACKET CONTROL ACK message with the Ctrl AcK bits set to "00". The MS shall always use the PACKET CONTROL ACK message with Ctrl Ack bits set to "00" in the case the network requests the "burst format" for such a message. According to GSM 04.60, the PACKET CONTROL ACK message can be sent either as a single burst or as a radio block (i.e. in 4 bursts); which format to use is broadcast by the network to the MSs via SYSTEM INFORMATION.

It can be appreciated the flexibility which the method of the invention confers to the network to poll the MS, via the PACKET POLLING REQUEST message, while the resources of a released downlink TBF are still active, for sending possible requests for the opening of an uplink TBF.

Further object of the invention is a first variant of the method in which the network includes in the PACKET POLLLING REQUEST message the indication of the time instants at which the MS can autonomously forward its request for an uplink TBF, without explicit invitation from the network.

Further object of the invention is a second variant of the method in which the network includes in the PACKET POLLING REQUEST message a new value of Timer T3192, therefore tailoring its value on connection base .

Further object of the invention is to allow the network, while timer T3193 is running, to release the still active resources of the closed downlink TBF, thus immediately freeing these resources and the associated TFI value, without waiting for Timer T3193 expiry.

### BRIEF DESCRIPTION OF THE DRAWINGS

The features of the present invention which are considered to be novel are set forth with particularity in the appended claims. The invention, together with further objects and advantages thereof, may be understood with reference to the following detailed description of an embodiment thereof taken in conjunction with the accompanying drawings given for purely non-limiting explanatory purposes and wherein:
- **fig.1** (already described) shows the formats of serial information constituting an LLC frame of the known GSM-GPRS network;
- **fig.2** (already described) shows a multiframe of 52 GSM frames used to time multiplex the GPRS and GSM logical channels.
- **fig.3** (already described) shows the content of a radio block included in the multiframe of fig.2;
- **fig.4** (already described) shows the physical layer underneath the radio blocks of the preceding Figures;
- **fig.5** (already described) shows the structure of a downlink data block of GSM-GPRS standard;
- **fig.6** (already described) shows the structure of a downlink control block of GSM-GPRS standard;
- **fig. 7 and fig.7a** (already described) show two message sequence charts of the release of a downlink TBF in accordance with the known art;
- **Figures 8 to 12** show as many message sequence charts of the release of a downlink TBF in accordance with the method of the present invention;

### DETAILED DESCRIPTION OF AN EMBODIMENT OF THE INVENTION

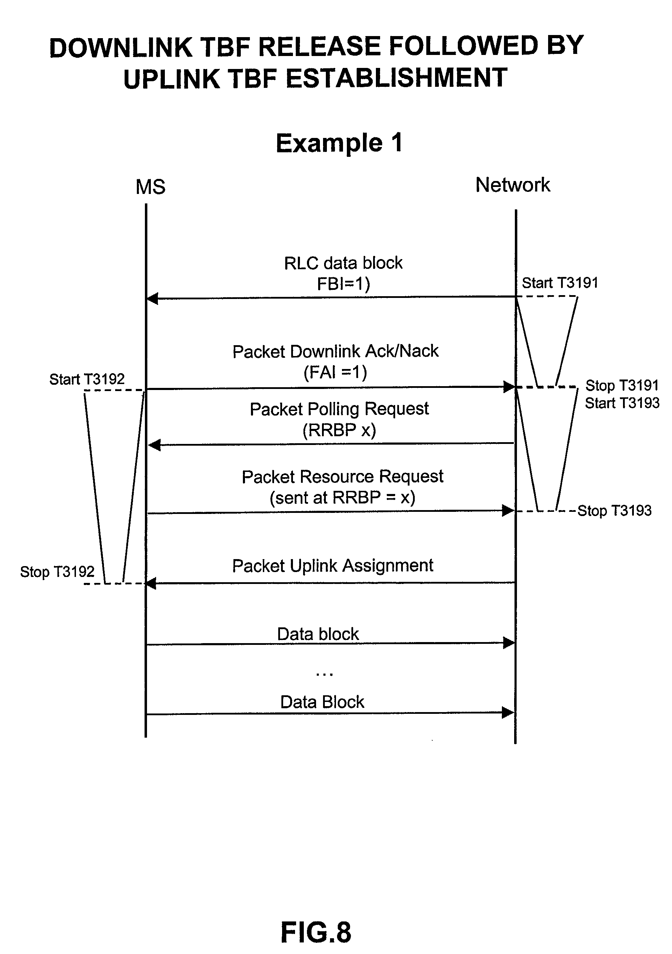

**Fig.8** shows a first Message Sequence Chart (MSC) of the release of a downlink TBF involving the PACKET POLLING REQUEST message. The MSC diagram evolves through the following sequential steps: the network sends the last RLC data block on the downlink TBF to the MS and starts Timer T3191. The MS acknowledges this last data block by sending, at the indicated RRBP, the PACKET DOWNLINK ACK/NACK message with FAI set to "1" and starts Timer T3192; this implies that at that RRBP the MS has no need to request for uplink TBF. At the detection of the PACKET UPLINK ACK/NACK message with FAI set to "1", the network stops T3191 and starts Timer T3193. In the present case, while Timer T3193 is running, the network sends to the MS a PACKET POLLING REQUEST message with a valid RRBP field. Having the MS at the network indicated RRBP data to transmit, the MS sends at that RRBP a PACKET RESOURCE REQUEST message. At the detection of the PACKET RESOURCE REQUEST message, the network stops Timer T3193 and answers to the MS by sending a PACKET UPLINK ASSIGNMENT message. The detection of the PACKET ASSIGNMENT message causes in the MS the stopping of T3192 and initiates the uplink TBF.

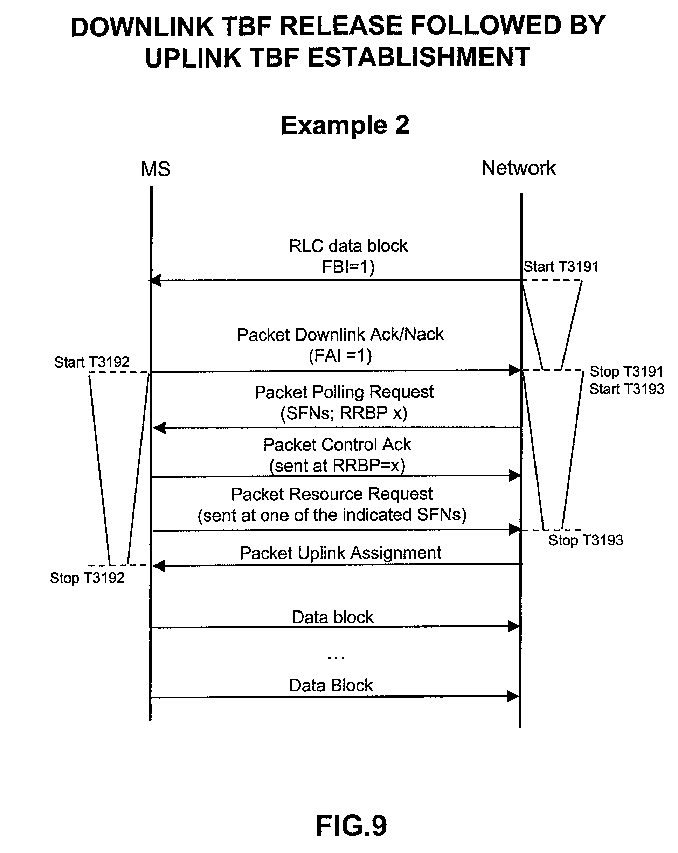

**Fig.9** shows a Message Sequence Chart (MSC) which mainly differs from the preceding one in that the network includes in the PACKET POLLING REQUEST message the System Frame Numbers (SFN) at which the MS is allowed to send its requests for a new uplink TBF, while Timer T3192 is not yet expired. The MS replies to the PACKET POLLING REQUEST message with the message PACKET CONTROL ACK sent at the indicated RRBP block. As soon as data are available, the MS checks T3192 status and, if not yet expired, it sends the PACKET RESOURCE REQUEST message at the next allowed SFN without expecting to be further polled by the network.

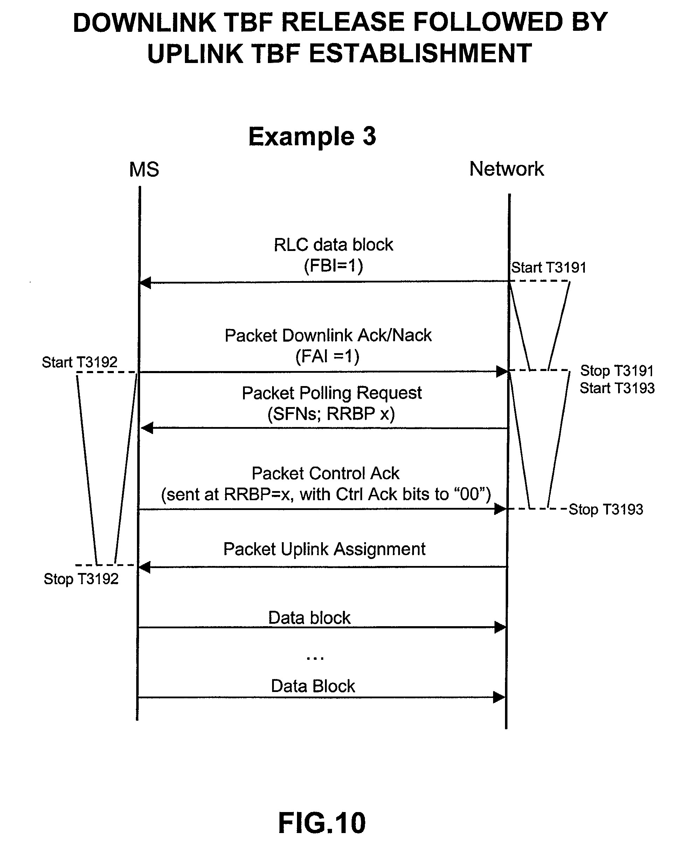

**Fig. 10** shows a Message Sequence Chart (MSC) which differs from the preceding one because, at the network indicated RRBP for sending the acknowledgement to the PACKET POLLING REQUEST message, the MS requests for an uplink TBF. In this example it is assumed, in not limiting way, that the network has imposed the use of the single burst format for the PACKET CONTROL ACK message; this is why the MS sends its request via the PACKET CONTROL ACK message with the Ctrl Ack bits set to "00".

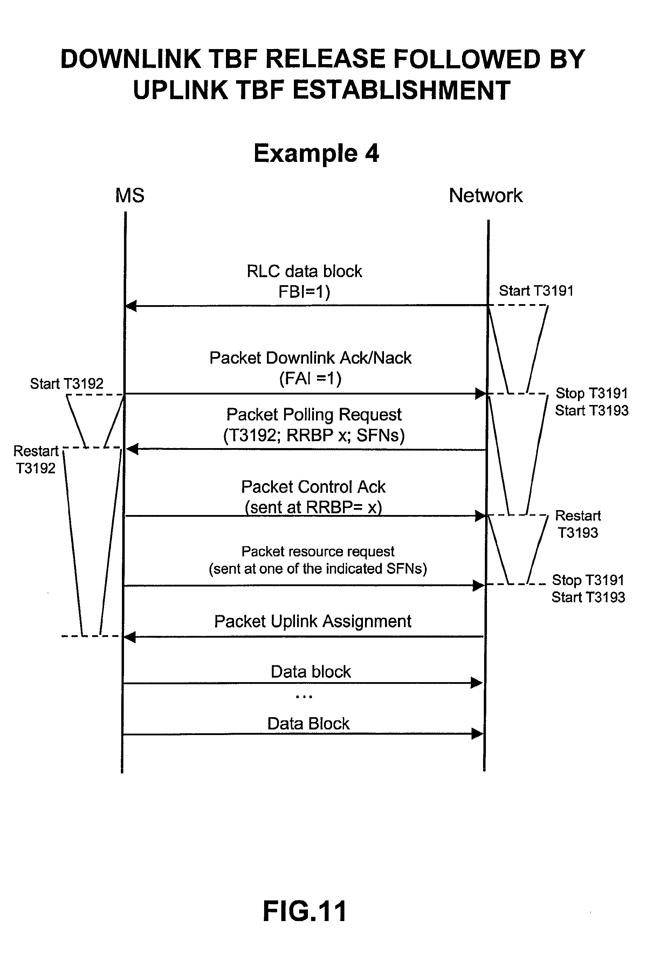

**Fig.11** shows a Message Sequence Chart (MSC) which differs from the preceding one because the network includes in the PACKET POLLING REQUEST message, besides the SFN indication, also a value for Timer T3192. At the detection of this PACKET POLLING REQUEST message, the MS restarts T3192 to the indicated value, and acknowledges the message via the PACKET CONTROL ACK message sent at the indicated RRBP. At the detection of the PACKET CONTROL ACK message, the network restarts T3193 based on the updated value of T3192 previously sent to the MS.

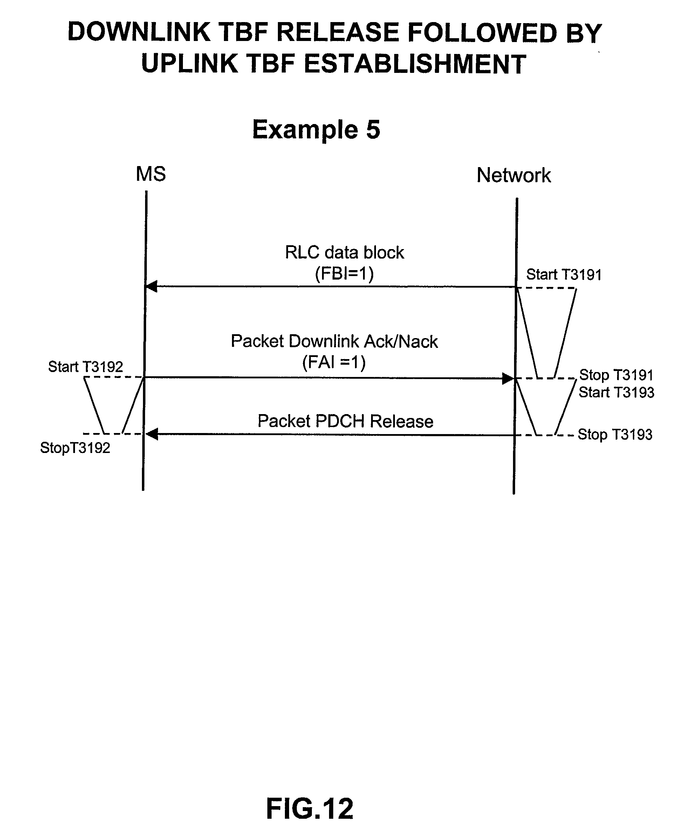

**Fig.12** shows a Message Sequence Chart (MSC) which differs from that of **Fig.8** in that the network sends, while Timer T3193 is running, a PACKET PDCH RELEASE message. At sending/receiving such a message, the network/MS shall immediately stops Timer T3193/T3192 and release the active resources.

## Claims

1. In a mobile radio network, method of release of a temporary connection for transmitting radio packets from the network downlink to a mobile station on cyclically numbered sequential frames having fixed duration, the radio packets conveying data or signalling of a transmission protocol exploiting control channels for exchanging relevant handshake control messages between the network and the mobile station for the held of a correct transmission and the allocation or de-allocation of resources temporarily allocated to that connection, including the following steps:
a) the network sends its last data packet to the mobile (FBI=1) and releases the downlink connection maintaining reserved the associated resources;
b) the mobile sends to the network an acknowledgement message (Packet Downlink Ack/Nack, FAI=1), granting the last received downlink data packet and starts a prefixed counting (T3192) of the radio frames elapsed since the sending of said acknowledgement message, during which shall act upon notification messages from the network, or at the expiring of the counting time consider said resources definitely released;
c) the network at the reception of the acknowledgement message (Packet Downlink Ack/Nack, FAI=1) from the mobile starts a specular prefixed counting time (T3193) during which can send messages (Packet Downlink Assignment, Packet Timeslot Reconfigure) to notify the mobile the establishment of a new downlink connection with relevant resources, or at the expiring of the counting time definitely releases said reserved resources,
**characterised in that**:
• the network at step c) sends a polling message (Packet Polling Request) to the mobile in order to solicit it for establishing an uplink connection and requesting the allocation of resources to send data packets;
• the mobile at step b) receives said polling message and sends to the network a message (Packet Resource Request) for requesting the establishment of an uplink connection and the allocation of relevant resources.

2. Method in accordance with claim 1, **characterised in that**:
• the network at step c) together with the polling message (Packet Polling Request) sends a field (RRBP x) including the indication (x) of the instant in which the mobile must reply to the polling message (Packet Polling Request);
• the mobile at step b) sends in the indicated instant its requesting message (Packet Resource Request);
• the network at step c) receives the above request from mobile, stops its counting (T3193) and sends to the mobile a message (Packet Uplink Assignment) to notify the uplink connection is established and relevant resources have been assigned;
• the mobile at step b) stops its counting (T3192) and sends data packet to the network on said connection.

3. Method in accordance with claim 1, **characterised in that**:
• the network at step c) sends with polling message (Packet Polling Request) a field (SFNs) indicating the frames at which the mobile must send its message (Packet Resource Request) for requesting the establishment of an uplink connection and the allocation of relevant resources;
• the mobile at step b) sends to the network its requesting message (Packet Resource Request) in one of the indicated frames;
• the network at step c) receives the requesting message (Packet Resource Request) from mobile, stops its counting (T3193) and sends to the mobile a message (Packet Uplink Assignment) to notify the uplink connection is established and relevant resources have been assigned;
• the mobile at step b) stops its counting (T3192) and sends packet data to the network exploiting said connection.

4. Method in accordance with claim 1, **characterised in that**:
• the network at step c) sends a polling message (Packet Polling Request) to the mobile in order to solicit it for establishing an uplink connection and requesting the allocation of the relevant resources;
• the mobile at step b) sends to the network a message (Packet Control Ack) for acknowledging the reception of the polling message, having an included field (Ctrl Ack) set to automatically request the establishment of an uplink connection and the allocation of relevant resources
• the network at step c) receives the acknowledge message (Packet Control Ack, Ctrl Ack) from mobile, stops its counting (T3193) and sends to the mobile a message (Packet Uplink Assignment) to notify the uplink connection is established and relevant resources have been assigned;
• the mobile at step b) stops its counting (T3192) and sends packet data to the network exploiting said connection.

5. Method in accordance with one of the preceding claims, **characterised in that**:
• the network at step c) sends a polling message (Packet Polling Request) including a field indicating a new counting value (T3192) for the mobile;
• the mobile at step b) decodes the new counting value (T3192) and restarts its counting to the new value;
• the network at step c) at the reception of the acknowledgement message (Packet Control Ack) from the mobile restarts the specular prefixed counting time (T3193).

6. Method in accordance with one of the preceding claims, **characterised in that**:
• the network at step c) sends to the mobile a release message (Packet PDCH Release) that the mobile shall acknowledge (Packet Control Ack), then stops its counting (T3193) and definitely releases the resources reserved for downlink transmission;
• the mobile at step b) receives the release message (Packet PDCH Release) and stops its counting (T3192).
